# EUROPÄISCHE PATENTANMELDUNG

(11) **EP 4 610 148 A1**
(43) Veröffentlichungstag der Anmeldung: **03.09.2025**
(21) Anmeldenummer: 25160421.1
(22) Anmeldetag: 26.02.2025
(51) Int. Cl.: B62D 33/02

(54) **KLAPPRUNGE MIT EINSTELLBAREM LAGERSPIEL**

(30) Priorität: 01.03.2024 DE 102024105913
(71) Anmelder: F. Hesterberg & Söhne GmbH & Co. KG, 44149 Dortmund (DE)
(72) Erfinder: Tiedtke, Henning, 58256 Ennepetal (DE)
(74) Vertreter: Janke Scholl Patentanwälte PartG mbB

(57) **Zusammenfassung**

Klapprunge für einen Nutzfahrzeugaufbau, mit einem Rungenkörper (6), mit einem Rungenlager (8) und mit einer Verriegelung (10), wobei der Rungenkörper (6) mittels der Verriegelung (10) formschlüssig an dem Rungenlager (8) fixierbar ist, wobei der Rungenkörper (6) im formschlüssig verriegelten Zustand nicht um eine Schwenkachse (12) des Rungenlagers (8) schwenkbar ist und wobei der Rungenkörper (8) bei geöffneter Verriegelung (10) um die Schwenkachse (12) des Rungenlagers (8) schwenkbar ist, wobei an dem Rungenkörper (6) zusätzlich zur Verriegelung (18) mindestens ein Druckstück (14) gehalten ist, um den Rungenkörper (6) im verriegelten Zustand kraftschlüssig gegen das Rungenlager (8) zu verspannen.

## Beschreibung

Die vorliegende Erfindung betrifft eine Klapprunge für einen Nutzfahrzeugaufbau, mit einem Rungenkörper, mit einem Rungenlager und mit einer Verriegelung, wobei der Rungenkörper mittels der Verriegelung formschlüssig an dem Rungenlager fixierbar ist, wobei der Rungenkörper im formschlüssig verriegelten Zustand nicht um eine Schwenkachse des Rungenlagers schwenkbar ist und wobei der Rungenkörper bei geöffneter Verriegelung um die Schwenkachse des Rungenlagers schwenkbar ist.

Klapprungen dienen z.B. dazu, Bordwände von Pritschenaufbauten zu fixieren und/oder zur Anbindung einer Dachkonstruktion an einen Fahrzeugrahmen, d.h. z.B. zur Spriegelrohranbindung. Eine jeweilige Klapprunge ist schwenkbar an dem jeweils zugeordneten Rungenlager gehalten und kann mittels der Verriegelung formschlüssig an dem Rungenlager fixiert werden.

Dynamische Belastungen im Fahrbetrieb, damit einhergehender Verschleiß sowie Fertigungsabweichungen können dazu führen, dass der Rungenkörper im verriegelten Zustand ein Spiel zum Rungenlager aufweist. Das Spiel kann im verriegelten Zustand zu seitlichen Bewegungen des Rungenkörpers führen. Das Spiel kann zu Geräuschen im Fahrbetrieb führen, die von dem jeweiligen Fahrzeugführer als störend empfunden werden. Das Spiel kann mit fortschreitendem Verschleiß zudem zu Funktionsstörungen führen. Es kann ein Austausch der Klapprunge erforderlich sein, um die geforderte Qualität sicherzustellen.

Vor diesem Hintergrund liegt der vorliegenden Erfindung die technische Problemstellung zugrunde, eine verbesserte Klapprunge der eingangs genannten Art anzugeben, die insbesondere eine Reduzierung oder Einstellung des Lagerspiels ermöglicht und insbesondere eine zuverlässige Funktion über die vorgesehene Lebensdauer gewährleistet.

Die voranstehend beschriebene, technische Problemstellung wird mit den Merkmalen des unabhängigen Anspruchs gelöst. Weitere Ausgestaltungen der Erfindung ergeben sich aus den abhängigen Ansprüchen und der nachstehenden Beschreibung.

Erfindungsgemäß wird eine Klapprunge für einen Nutzfahrzeugaufbau angegeben, mit einem Rungenkörper, mit einem Rungenlager und mit einer Verriegelung, wobei der Rungenkörper mittels der Verriegelung formschlüssig an dem Rungenlager fixierbar ist, wobei der Rungenkörper im formschlüssig verriegelten Zustand nicht um eine Schwenkachse des Rungenlagers schwenkbar ist und wobei der Rungenkörper bei geöffneter Verriegelung um die Schwenkachse des Rungenlagers schwenkbar ist. Die Klapprunge zeichnet sich dadurch aus, dass an dem Rungenkörper zusätzlich zur Verriegelung mindestens ein Druckstück gehalten ist, um den Rungenkörper im verriegelten Zustand kraftschlüssig gegen das Rungenlager zu verspannen. Alternativ oder ergänzend zeichnet sich die Klapprunge dadurch aus, dass an dem Rungenkörper zusätzlich zur Verriegelung mindestens eine Schraubenverbindung vorgesehen ist, um ein Lagerspiel des Rungenlagers zu reduzieren.

Das Druckstück ermöglicht eine zusätzliche Fixierung und insbesondere eine Reduzierung und/oder Einstellung eines Lagerspiels, das im Bereich der Schwenkachse zwischen dem Rungenlager und dem Rungenkörper gebildet ist.

Das Druckstück ist insbesondere in Richtung des Rungenlagers verschiebbar bzw. bewegbar an dem Rungenkörper angeordnet. Auf diese Weise kann ein Spalt zwischen dem Rungenkörper und dem Rungenlager überbrückt und ein Lagerspiel eingestellt werden. Das Druckstück ermöglicht insbesondere ein Nachstellen bzw. Nachjustieren zur Verringerung des Lagerspiels, sofern Verschleiß und/oder dynamische Betriebslasten zu einer Vergrößerung des Lagerspiels geführt haben.

Als Alternative zum Druckstück oder zusätzlich zum Druckstück kann eine Schraubenverbindung vorgesehen sein, um ein Lagerspiel des Rungenlagers zu reduzieren. Die Schraubenverbindung kann dazu eingerichtet sein, den Rungenkörper gegen das Rungenlager zu verspannen.

Erfindungsgemäß wird daher eine verbesserte Klapprunge angegeben, die insbesondere eine Reduzierung oder Einstellung des Lagerspiels ermöglicht und insbesondere eine zuverlässige Funktion über die vorgesehene Lebensdauer gewährleistet.

Gemäß einer Ausgestaltung der Klapprunge ist vorgesehen, dass dem Druckstück eine Schraube oder mehrere Schrauben zugeordnet sind, um das Druckstück gegen das Rungenlager zu verspannen. Die Schraube kann zur Einstellung einer Position des Druckstücks relativ zum Rungenlager vorgesehen sein.

Alternativ oder ergänzend kann eine Feder vorgesehen sein, um das Druckstück gegen das Rungenlager zu verspannen. So kann das Druckstück federnd elastisch zwischen dem Rungenkörper und dem Rungenlager verspannt sein.

Die Verriegelung kann einen Keilriegel aufweisen, wobei das mindestens eine Druckstück in vertikaler Richtung betrachtet zwischen dem Keilriegel und der Schwenkachse angeordnet ist, sofern sich der Rungenkörper im formschlüssig verriegelten Zustand befindet. Der Keilriegel kann mittels eines Hebels in vertikaler Richtung verschiebbar an dem Rungenkörper gehalten sein.

Das Rungenlager kann im fertig montierten Zustand an einem Fahrzeugrahmen oder einem mit dem Fahrzeugrahmen verbundenen Profil befestigt sein.

Der Keilriegel kann dazu eingerichtet sein, in einen Vorsprung oder eine Ausnehmung des Rungenlagers einzugreifen, um den Rungenkörper formschlüssig an dem Rungenlager zu verriegeln.

Das Druckstück ist am dem Rungenkörper gehalten und daher zusammen mit dem Rungenkörper um die Schwenkachse schwenkbar und damit relativ zu dem feststehenden Rungenlager schwenkbar.

Insbesondere kann vorgesehen sein, dass das Druckstück, soweit sich der Rungenkörper in seiner am Rungenlager verriegelten, nicht schwenkbaren Position befindet, an dem Rungenlager anliegt, und in einer entriegelten Position des Rungenkörpers nach dem Schwenken des Rungenkörpers nicht an dem Rungenlager anliegt. Demnach wird das Druckstück beim Zurückschwenken des Rungenkörpers wieder mit dem Rungenlager in Anlage gebracht, so dass das Druckstück beim Zurückschwenken entlang des Rungenlagers in seine vorgesehene Position gleitet, bevor die Verriegelung des Rungenkörpers am Rungenlager erfolgt.

Es kann vorgesehen sein, dass das Druckstück in einem dem Rungenlager zugewandten Bereich angefast ist oder keilförmig verjüngt ist. Auf diese Weise kann ein Schwenken des Rungenkörpers relativ zum Rungenlager begünstigt werden, in dem ein Verkanten oder Blockieren des Druckstücks am Rungenlager vermieden werden kann und des Druckstück beim Schwenken entlang der Fase oder Verjüngung am Rungenlager abgleitet.

Der Rungenkörper kann zwei Streben aufweisen, wobei das Rungenlager zwischen den Streben angeordnet ist. Die Streben können ein gabelförmiges Ende des Rungenkörpers ausbilden, welches das Rungenlager zweiseitig einfasst.

Es kann vorgesehen sein, dass das mindestens eine Druckstück an einer der Streben gehalten ist und zwischen dieser Strebe und dem Rungenlager angeordnet ist.

Das Druckstück kann einen metallischen Werkstoff aufweisen oder aus einem metallischen Werkstoff bestehen. Alternativ oder ergänzend kann vorgesehen sein, dass das Druckstück einen Kunststoff aufweist oder aus einem Kunststoff besteht. Das Druckstück kann sowohl einen metallischen Werkstoff als auch einen Kunststoff aufweisen.

Das Druckstück kann einen elastischen Werkstoff aufweisen oder aus einem elastischen Werkstoff bestehen. Das Druckstück kann elastisch verformbar sein und im verspannten Zustand durch eine elastische Verformung zwischen dem Rungenlager und dem Rungenkörper verspannt sein. So kann das Druckstück ein federnd wirkendes Bauteil sein, das zwischen dem Rungenlager und dem Rungenkörper komprimiert wird, um ein Lagerspiel zu reduzieren oder zu eliminieren.

Die Klapprunge kann zwei Druckstücke aufweisen, die an einander abgewandten Seiten des Rungenlagers angeordnet sind und das Rungenlager im verspannten Zustand zweiseitig einfassen. Demnach kann der Rungenkörper entlang der Schwenkachse betrachtet zweiseitig an dem Rungenlager abgestützt sein, um ein Lagerspiel in entgegengesetzter Richtung auszugleichen bzw. um den Rungenkörper entlang der Schwenkachse betrachtet beidseitig in zwei Richtungen gegenüber Betriebslasten abzustützen.

An jeder Strebe des Rungenkörpers kann jeweils eines der zwei Druckstücke gehalten sein. Gemäß alternativer Ausgestaltungen der Klapprunge kann vorgesehen sein, dass jeder Strebe zwei oder mehr Druckstücke zugeordnet sind.

Der Rungenkörper kann mittels einer Bolzenverbindung an dem Rungenlager gehalten sein. Die Bolzenverbindung sorgt dafür, dass der Rungenkörper im entriegelten Zustand lediglich um die Schwenkachse schwenkbar ist, wobei alle translatorischen Freiheitsgrade formschlüssig durch die Bolzenverbindung gesperrt sind.

Es kann vorgesehen sein, dass ein Lagerbolzen das Rungenlager durchdringt und die Schwenkachse ausbildet, um die der Rungenkörper im entriegelten Zustand schwenkbar ist, wobei der Lagerbolzen in Öffnungen des Rungenkörpers eingreift und der Rungenkörper formschlüssig an dem Lagerbolzen gehalten ist.

Die Öffnungen können an den Streben des Rungenkörpers gebildet sein. Der Lagerbolzen kann mit seinen einander abgewandten Enden jeweils in einer Öffnung der jeweiligen Strebe sitzen. Die Öffnungen können Sacklöcher sein. Die Öffnungen und der Lagerbolzen können eine im Wesentlichen kreiszylindrische Form aufweisen.

Die Klapprunge kann zur Verriegelung von Bordwänden für ein Pritschenfahrzeug vorgesehen ist. Vergleichbare Klapprungen werden seitens der Anmelderin z.B. unter der Marke "SolidMaster" vertrieben.

Die Klapprunge kann eine Länge von mehr als 300 mm und weniger als 1500 mm aufweisen.

Die Klapprunge kann an einem dem Rungenlager abgewandten Ende eine Spriegelrohranbindung aufweisen.

Es kann vorgesehen sein, dass die Streben der Klapprunge mittels der Schraubenverbindung miteinander verbunden sind.

Die Schraubenverbindung kann eine Schraube aufweisen, wobei eine der Streben eine Durchgangsöffnung aufweist und eine der Streben ein Gewinde aufweist, wobei die Schraube durch die Durchgangsöffnung gesteckt ist und in das Gewinde eingeschraubt ist. Alternativ kann statt eines in die Strebe geschnittenen Gewindes eine Gewindemutter in eine Öffnung der Strebe eingelegt sein, um das Gewinde bereitzustellen. Alternativ kann ein Gewindehülse durch eine Durchgangsöffnung der Strebe gesteckt sein, um das Gewinde bereitzustellen.

Ein Schraubenschaft der Schraube kann einen Lagerbolzen ausbilden. Der Schraubenschaft der Schraube kann das Rungenlager durchdringen und kann eine Schwenkachse ausbilden, um die der Rungenkörper im entriegelten Zustand schwenkbar ist.

Der Schraubenschaft der Schraube kann als Lagerbolzen zur Lagerung der Streben am Rungenlager dienen.

Nachfolgend wird die Erfindung anhand einer Ausführungsbeispiele darstellenden Zeichnung näher beschrieben. Es zeigen jeweils schematisch:
- Fig. 1: eine erfindungsgemäße Klapprunge in einer Frontansicht;
- Fig. 2: die Klapprunge aus Fig. 1 in einer Seitenansicht;
- Fig. 3: eine Schnittansicht gemäß der Schnittebene A - A aus Fig. 2;
- Fig. 4: eine Schnittansicht gemäß der Schnittebene B - B aus Fig. 1;
- Fig. 5: eine Schnittansicht gemäß der Schnittebene C - C aus Fig. 1;
- Fig. 6: eine weitere erfindungsgemäße Klapprunge in einer teilweisen Frontansicht;
- Fig. 7: die Klapprunge aus Fig. 6 mit sichtbarem Innenraum
- Fig. 8: eine Schnittansicht gemäß der Schnittebene D - D aus Fig. 6 und Fig. 7.

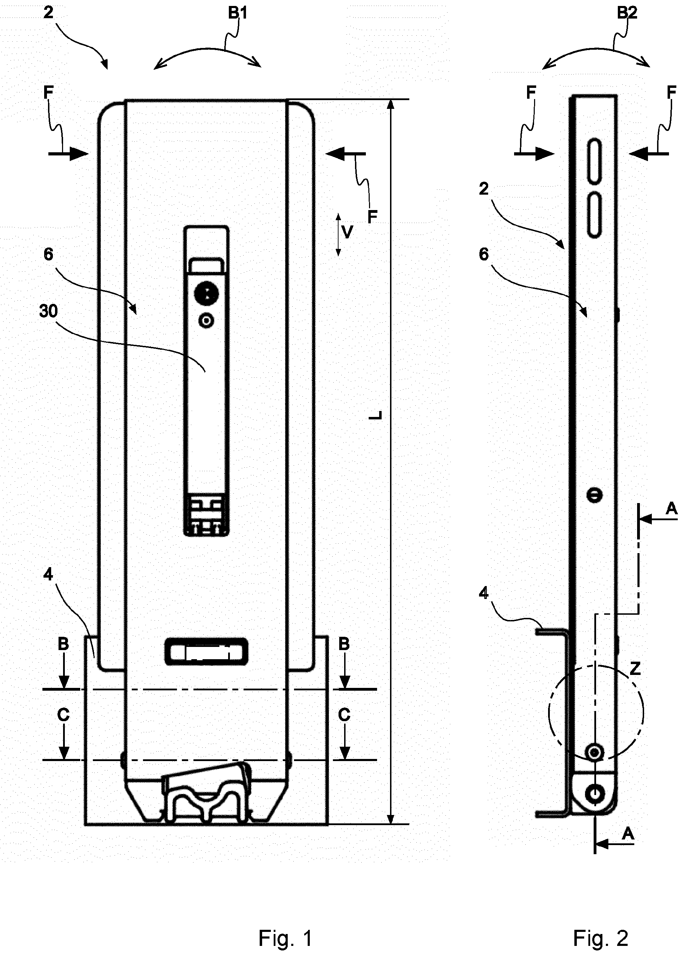

Fig. 1 zeigt eine erfindungsgemäße Klapprunge 2 für einen Nutzfahrzeugaufbau in einer Frontansicht. Fig. 2 zeigt die Klapprunge 2 aus Fig. 1 in einer Seitenansicht.

Die Klapprunge 2 befindet sich gemäß Fig. 1 und Fig. 2 in einem verriegelten Zustand und ist an einem Profil 4 fixiert. Das Profil 4 kann im fertig montierten Zustand Teil einer Fahrzeugkarosserie sein oder mit einer Fahrzeugkarosserie verbunden sein. Das Profil 4 steht exemplarisch und schematisch für einen Befestigungsbereich, an dem ein später noch näher beschriebenes Rungenlager der Klapprunge 2 befestigt ist.

In den Figuren 1 und 2 sind exemplarisch Kräfte F eingezeichnet, die als statische und/oder dynamische Betriebslasten auf die Klapprunge 2 wirken können. Die Kräfte F können, je nach Spiel der Rungenlagerung, eine Bewegung B1 bzw. B2 der Klapprunge 2 erzeugen. Erfindungsgemäß sollten diese Bewegungen B1 und B2 unter Last minimiert bzw. eliminiert werden.

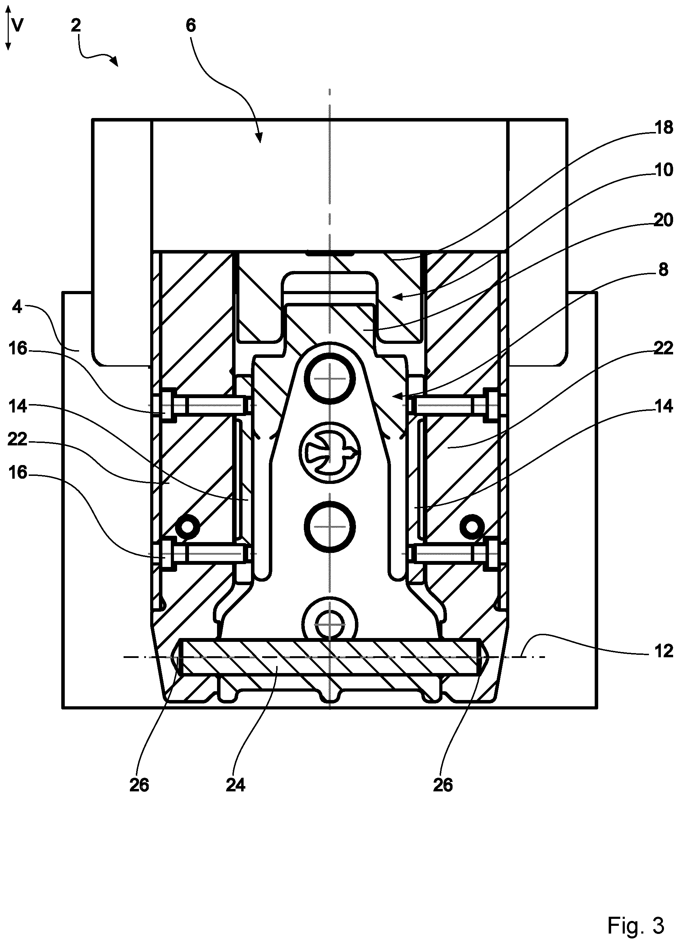

Fig. 3 zeigt eine Schnittansicht der Klapprunge 2 gemäß der Schnittebene A - A aus Fig. 2.

Die Klapprunge 2 hat einen Rungenkörper 6. Die Klapprunge 2 hat ein Rungenlager 8 und eine Verriegelung 10.

Der Rungenkörper 6 ist mittels der Verriegelung 10 formschlüssig an dem Rungenlager 8 fixierbar. Der Rungenkörper 6 ist im formschlüssig verriegelten Zustand nicht um eine Schwenkachse 12 des Rungenlagers 8 schwenkbar.

Der Rungenkörper 6 ist bei geöffneter Verriegelung 10 um die Schwenkachse 12 des Rungenlagers 8 schwenkbar.

An dem Rungenkörper 6 sind zusätzlich zur Verriegelung 10 zwei Druckstücke 14 gehalten, um den Rungenkörper 6 im verriegelten Zustand kraftschlüssig gegen das Rungenlager 8 zu verspannen.

Jedem Druckstück 14 sind zwei Schrauben 16 zugeordnet. Die Schrauben 16 halten das jeweilige Druckstück 14 und dienen dazu, das Druckstück 14 gegen das Rungenlager 8 zu verspannen. So kann eine Position des jeweiligen Druckstücks 14 mittels der zugeordneten Schrauben 16 eingestellt werden.

Die Verriegelung 10 weist einen Keilriegel 18 auf, der einen Steg 20 des Rungenlagers 8 hintergreift. Im gezeigten verriegelten Zustand ist daher kein Schwenken des Rungenkörpers 6 um die Schwenkachse 12 möglich, da der Keilriegel 18 an dem Steg 20 des Rungenlagers 8 anliegt und ein Schwenken formschlüssig blockiert.

Die Druckstücke 14 sind in vertikaler Richtung V betrachtet zwischen dem Keilriegel 18 und der Schwenkachse 12 angeordnet, sofern sich der Rungenkörper 6, wie dargestellt, im formschlüssig verriegelten Zustand befindet.

Der Rungenkörper 6 weist zwei Streben 22 auf, wobei das Rungenlager 8 zwischen den Streben 22 angeordnet ist.

Jede Strebe 22 trägt ein jeweils zugeordnetes Druckstück 14, so dass die Streben 22 und die Druckstücke 14 das Rungenlager 8 zweiseitig einfassen. Die zwei Druckstücke 14 sind daher an einander abgewandten Seiten des Rungenlagers 8 angeordnet und fassen das Rungenlager 8 im gezeigten verspannten Zustand zweiseitig ein. Die Druckstücke 14 dienen dazu, ein Spiel zwischen dem Rungenkörper 6 und dem Rungenlager 8 zu minimieren bzw. zu eliminieren.

Ein Lagerbolzen 24 durchdringt das Rungenlager 8 und bildet die Schwenkachse 12 aus, um die der Rungenkörper 6 im entriegelten Zustand schwenkbar ist.

Der Lagerbolzen 24 greift in Öffnungen 26 des Rungenkörpers 6 ein, die an den Streben 22 des Rungenkörpers 6 ausgebildet sind.

Der Rungenkörper 6 ist formschlüssig an dem Lagerbolzen 24 gehalten.

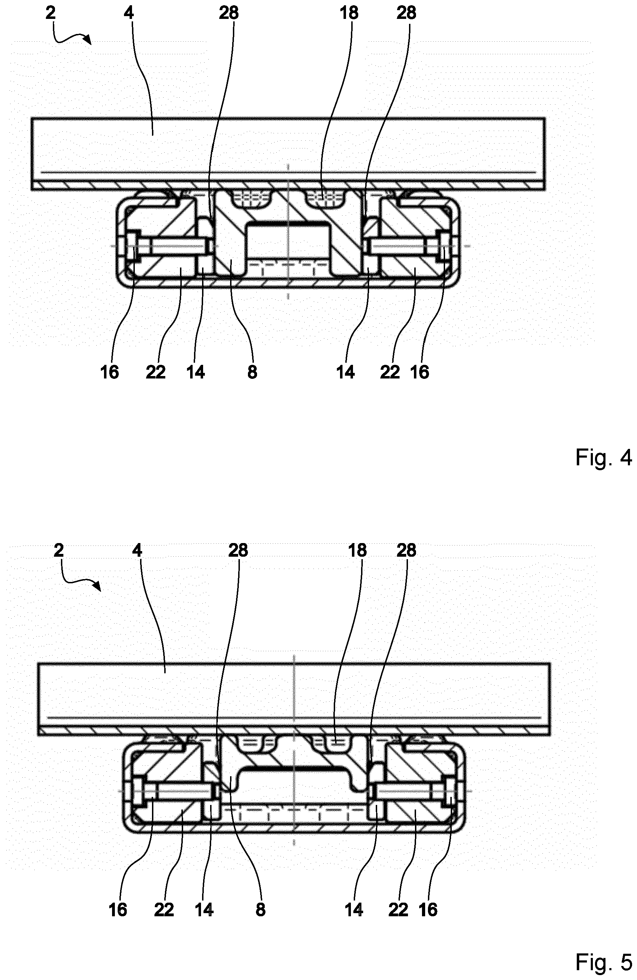

Das jeweilige Druckstück 14 ist in einem dem Rungenlager 8 zugewandten Bereich angefast, d.h. weist jeweils eine Fase 28 auf. So kann ein Zurückschwenken des Rungenkörpers 6 vereinfacht werden, da die Druckstücke 14 zuverlässig entlang der jeweiligen Fase 28 am Rungenlager 8 abgleiten und ihre vorgesehene Position gebracht werden können, ohne, dass es einem Verklemmen kommt (Fig. 4, Fig. 5).

Die Druckstücke 14, die an dem Rungenkörper 6 gehalten sind, sind zusammen mit dem Rungenkörper 6 relativ zum ortsfesten Rungenlager 8 um die Schwenkachse 12 schwenkbar, sofern der Keilriegel 18 entriegelt worden ist. Das Entriegeln des Keilriegels 18 erfolgt mittels eines Hebels 30, der an dem Rungenkörper 6 angeordnet ist.

Die Druckstücke 14 sind vorliegend jeweils aus einem metallischen Werkstoff gebildet.

Die Klapprunge 2 ist zur Verriegelung von Bordwänden für ein Pritschenfahrzeug vorgesehen.

Die Klapprunge 2 weist eine Länge L von mehr als 300 mm und weniger als 1500 mm auf.

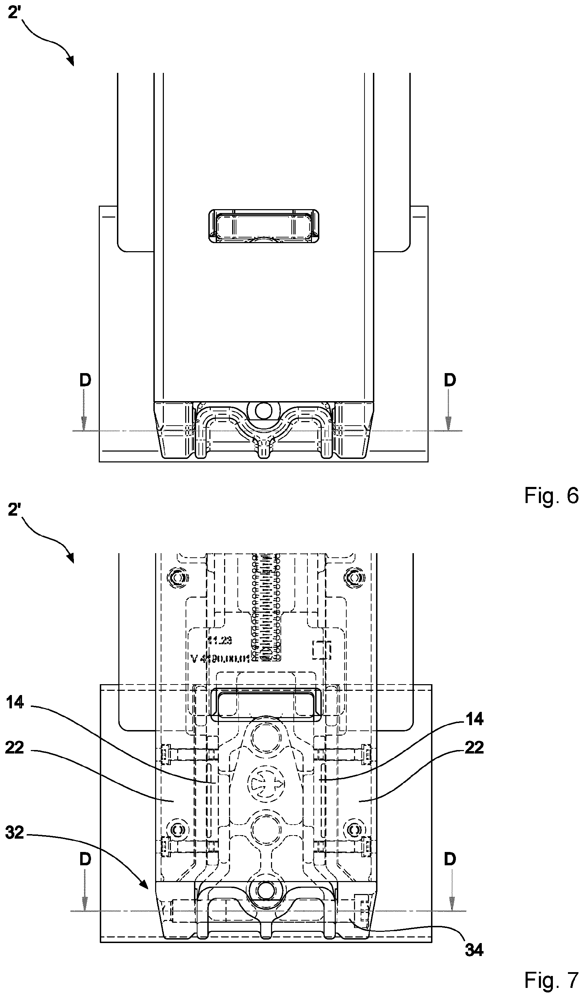

Die Figuren Fig. 6, 7 und 8 zeigen eine weitere erfindungsgemäße Klapprunge 2'. Zur Vermeidung von Wiederholungen wird nachfolgend lediglich auf die Unterschiede zu den voranstehend beschriebenen Ausführungsbeispielen eingegangen, wobei gleichen Merkmalen gleiche Bezugszeichen zugeordnet werden.

Die Klapprunge 2' unterscheidet sich dadurch von der zuvor beschriebenen Klapprunge 2, dass die Streben 22 mittels einer Schraubenverbindung 32 miteinander verbunden sind. So kann ein Abstand der Streben 22 bzw. eine Vorspannung eingestellt werden, um das Spiel in diesem Bereich zu verringern.

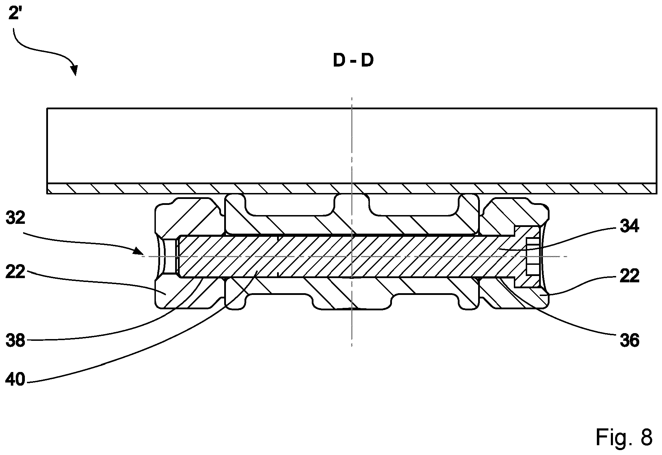

Die Schraubenverbindung 32 weist eine Schraube 34 auf, die durch einen Durchgangsöffnung 36 der in Fig. 8 rechts gezeigten Strebe 22 gesteckt ist. Die Schraube 34 ist ein Gewinde 38 der in Fig. 8 links gezeigten Strebe 22 eingeschraubt.

Die Schraubenverbindung 32 der Klapprunge 2' ersetzt damit für dieses Ausführungsbeispiel den Lagerbolzen 24 der Klapprunge 2. Auf diese Wiese kann für die Klapprunge 2' im Zusammenwirken mit den Druckstücken eine zusätzliche Verringerung und Einstellbarkeit des Lagerspiels am Rungenlager. Ein Schraubenschaft 40 der Schraube 34 dient dabei als Lagerbolzen 40.

Die Klapprunge 2' weist sowohl die Schraubenverbindung 32 als auch die Druckstücke 14 auf. Gemäß alternativer Ausführungsbeispiele kann vorgesehen sein, dass eine gegenständliche Klapprunge keine Druckstücke 14, sondern ausschließlich die Schraubenverbindung 32 aufweist, um das Lagerspiel zu verringern.

### Bezugszeichen

- 2: Klapprunge
- 4: Profil
- 6: Rungenkörper
- 8: Rungenlager
- 10: Verriegelung
- 12: Schwenkachse
- 14: Druckstück
- 16: Schraube
- 18: Keilriegel
- 20: Steg
- 22: Strebe
- 24: Lagerbolzen
- 26: Öffnung
- 28: Fase
- 30: Hebel
- 32: Schraubenverbindung
- 34: Schraube
- 36: Durchgangsöffnung
- 38: Gewinde
- 40: Schraubenschaft
- F: Kraft
- B1: Bewegung
- B2: Bewegung
- V: Vertikale
- L: Länge

## Patentansprüche

1. Klapprunge für einen Nutzfahrzeugaufbau,
- mit einem Rungenkörper (6),
- mit einem Rungenlager (8) und
- mit einer Verriegelung (10),
- wobei der Rungenkörper (6) mittels der Verriegelung (10) formschlüssig an dem Rungenlager (8) fixierbar ist, wobei der Rungenkörper (6) im formschlüssig verriegelten Zustand nicht um eine Schwenkachse (12) des Rungenlagers (8) schwenkbar ist
- und wobei der Rungenkörper (8) bei geöffneter Verriegelung (10) um die Schwenkachse (12) des Rungenlagers (8) schwenkbar ist,
**dadurch gekennzeichnet, dass**
- an dem Rungenkörper (6) zusätzlich zur Verriegelung (18) mindestens ein Druckstück (14) gehalten ist, um den Rungenkörper (6) im verriegelten Zustand kraftschlüssig gegen das Rungenlager (8) zu verspannen und/oder
- an dem Rungenkörper (6) zusätzlich zur Verriegelung (18) mindestens eine Schraubenverbindung (32) vorgesehen ist, um ein Lagerspiel des Rungenlagers (8) zu reduzieren.

2. Klapprunge nach Anspruch 1,
**dadurch gekennzeichnet, dass**
dem Druckstück (14) eine Schraube (16) oder mehrere Schrauben (16) zugeordnet sind, um das Druckstück (14) gegen das Rungenlager (8) zu verspannen.

3. Klapprunge nach einem der voranstehenden Ansprüche,
**dadurch gekennzeichnet, dass**
die Verriegelung (10) einen Keilriegel (18) aufweist, wobei das mindestens eine Druckstück (14) in vertikaler Richtung (V) betrachtet zwischen dem Keilriegel (18) und der Schwenkachse (12) angeordnet ist, sofern sich der Rungenkörper (6) im formschlüssig verriegelten Zustand befindet.

4. Klapprunge nach einem der voranstehenden Ansprüche,
**dadurch gekennzeichnet, dass**
das Druckstück (14) in einem dem Rungenlager (8) zugewandten Bereich angefast ist oder keilförmig verjüngt ist.

5. Klapprunge nach einem der voranstehenden Ansprüche,
**dadurch gekennzeichnet, dass**
der Rungenkörper (6) zwei Streben (22) aufweist, wobei das Rungenlager (8) zwischen den Streben (22) angeordnet ist.

6. Klapprunge nach Anspruch 5,
**dadurch gekennzeichnet, dass**
das mindestens eine Druckstück (14) an einer der Streben (22) gehalten ist und zwischen dieser Strebe (12) und dem Rungenlager (8) angeordnet ist.

7. Klapprunge nach einem der voranstehenden Ansprüche,
**dadurch gekennzeichnet, dass**
das Druckstück (14) einen metallischen Werkstoff aufweist oder aus einem metallischen Werkstoff besteht
oder
das Druckstück einen Kunststoff aufweist oder aus einem Kunststoff besteht oder
das Druckstück einen elastischen Werkstoff aufweist oder aus einem elastischen Werkstoff besteht, insbesondere, dass das Druckstück ein federnd wirkendes Bauteil ist, das zwischen dem Rungenlager und dem Rungenkörper komprimiert ist.

8. Klapprunge nach einem der voranstehenden Ansprüche,
**dadurch gekennzeichnet, dass**
zwei Druckstücke (14) vorgesehen sind, die an einander abgewandten Seiten des Rungenlagers (8) angeordnet sind und das Rungenlager (8) im verspannten Zustand zweiseitig einfassen.

9. Klapprunge nach Anspruch 7 und Anspruch 8,
**dadurch gekennzeichnet, dass**
an jeder Strebe (22) eines der zwei Druckstücke (14) gehalten ist.

10. Klapprunge nach einem der voranstehenden Ansprüche,
**dadurch gekennzeichnet, dass**
ein Lagerbolzen (24) das Rungenlager (8) durchdringt und die Schwenkachse (12) ausbildet, um die der Rungenkörper (6) im entriegelten Zustand schwenkbar ist, wobei der Lagerbolzen (24) in Öffnungen (26) des Rungenkörpers (6) eingreift und der Rungenkörper (6) formschlüssig an dem Lagerbolzen gehalten ist.

11. Klapprunge nach einem der voranstehenden Ansprüche,
**dadurch gekennzeichnet, dass**
die Klapprunge (2) zur Verriegelung von Bordwänden für ein Pritschenfahrzeug vorgesehen ist
und/oder
eine Länge (L) von mehr als 300 mm und weniger als 1500 mm aufweist und/oder
an einem dem Rungenlager (8) abgewandten Ende eine Spriegelrohranbindung aufweist.

12. Klapprunge nach Anspruch 5,
**dadurch gekennzeichnet, dass**
dass die Streben (22) mittels der Schraubenverbindung (32) miteinander verbunden sind.

13. Klapprunge nach Anspruch 12,
**dadurch gekennzeichnet, dass**
die Schraubenverbindung (32) eine Schraube (34) aufweist, insbesondere, dass eine der Streben (22) eine Durchgangsöffnung (36) aufweist und eine der Streben (22) ein Gewinde (38) aufweist, und
dass die Schraube (34) durch die Durchgangsöffnung gesteckt ist und in das Gewinde (38) eingeschraubt ist.

14. Klapprunge nach Anspruch 13,
**dadurch gekennzeichnet, dass** ein Schraubenschaft (40) der Schraube (34) einen Lagerbolzen ausbildet.
